# EUROPÄISCHE PATENTSCHRIFT

(11) **EP 2 960 632 B1**
(45) Veröffentlichungstag und Bekanntmachung des Hinweises auf die Patenterteilung: **17.05.2017**
(21) Anmeldenummer: 15173581.8
(22) Anmeldetag: 24.06.2015
(51) Int. Cl.: G01D 18/00, G01D 21/00

(54) **VERFAHREN UND SYSTEM ZUM AUFBEREITEN VON DURCH KRAFTFAHRZEUGSEITIG ANGEORDNETE SENSOREN ERZEUGTEN SENSORMESSWERTEN**
METHOD AND SYSTEM FOR THE PREPARATION OF SENSOR VALUES GENERATED BY SENSORS ASSEMBLED IN A VEHICLE
PROCEDE ET DISPOSITIF DE PREPARATION DE VALEURS DE MESURE DE CAPTEUR GENEREES PAR DES CAPTEURS DISPOSES COTE VEHICULE AUTOMOBILE

(30) Priorität: 26.06.2014 DE 102014108946
(43) Veröffentlichungstag der Anmeldung: 30.12.2015
(73) Patentinhaber: Valeo Schalter und Sensoren GmbH, 74321 Bietigheim-Bissingen (DE)
(72) Erfinder: Schoenbrod, Juergen, 74321 Bietigheim-Bissingen (DE); Tandjeu-Tchuissi, Landry, 74321 Bietigheim-Bissingen (DE)

(56) Entgegenhaltungen:
- CN-C- 100 491 163
- DE-A1- 10 030 987
- US-A1- 2002 031 101
- US-A1- 2010 280 737
- US-B1- 6 189 124
- US-B1- 8 694 879

## Beschreibung

Die Erfindung betrifft ein Verfahren zum Aufbereiten von durch kraftfahrzeugseitig angeordnete Sensoren erzeugten Sensormesswerten.

Die Überprüfung von Sensormesswerten ist in der Kraftfahrzeugtechnik bekannt. Dadurch sollen die Genauigkeiten der erhaltenen Informationen erhöht werden und die Sicherheit der Betriebsweisen verbessert werden. Allerdings ist dies sehr aufwändig. Gerade dann, wenn unterschiedliche Kraftfahrzeugtypen und/oder Kraftfahrzeughersteller verschiedene Sensoren und Sensortypen einsetzen ist hier die Überprüfung sehr individuell durchzuführen und daher diesbezüglich sehr wenig übertragbar. Daraus ergibt sich auch hoher Entwicklungsaufwand.

Ferner sind aus der US 2010/280737 A1, DE 100 30 987 A1 und US 2002/031101 A1 jeweils Verfahren zum Aufbereiten von Sensormesswerten von kraftfahrzeugseitigen Sensoren bekannt, wobei die Sensormesswerte durch eine Verarbeitungseinheit in Sensordaten überführt werden und eine aus den Sensordaten eine Kennung gemäß einer vorbestimmten Aufbereitungsvorschrift generiert wird. Die Sensordaten mit der Kennung werden dann durch die Verarbeitungseinheit als überprüfte Sensordaten gekennzeichnet und bereitgestellt. Dabei werden die Sensordaten insbesondere mit eine Prüfsumme bzw. einem CRC-Code versehen.

Es ist eine Aufgabe der vorliegenden Erfindung, die Aufbereitung von Sensordaten zu vereinfachen.

Diese Aufgabe wird durch ein Verfahren nach dem unabhängigen Anspruch gelöst. In dem erfindungsgemäßen Verfahren werden durch kraftfahrzeugseitig angeordnete Sensoren erzeugte Sensormesswerte aufbereitet. Die Sensormesswerte werden zunächst in Sensordaten überführt. Es kann sich hier beispielsweise um ein Digitalisieren von analogen Signalen handeln oder auch ein Umwandeln von Sensorrohdaten in eine Form, mit welcher nachgeordnete weitere Verarbeitungseinheiten, beispielsweise dank eines Datenstandards, ihre jeweils zugeordneten Funktionen erfüllen können. In dem Verfahren wird durch eine vorbestimmte, insbesondere dateninhaltsbezogene,

Aufbereitungsvorschrift auf die Sensordaten eine Kennung generiert, welche die Sensordaten zumindest teilweise charakterisiert. Dabei kann es sich um einen Prüfwert der Sensordaten, wie er aus der zyklischen Redundanzprüfung (Cyclic Redundancy Check, CRC) bekannt ist, handeln. Mit dieser Kennung werden die Sensordaten als überprüfte Sensordaten gekennzeichnet, und die gekennzeichneten überprüften Sensordaten werden bereitgestellt, beispielsweise an ein kraftfahrzeugseitig angeordnetes Steuergerät. Dabei ist die Aufbereitungsvorschrift in zumindest zwei getrennt voneinander anwendbare vorbestimmte Teilvorschriften geteilt, um die Aufbereitung von Sensordaten zu vereinfachen. In dem Verfahren wird zunächst eine vorläufige Kennung aus den Sensordaten durch eine erste Teilvorschrift in einer kraftfahrzeugseitigen Hauptverarbeitungseinheit generiert. Die vorläufige Kennung wird dann an eine kraftfahrzeugseitige Nebenverarbeitungseinheit übermittelt. Danach wird die vorläufige Kennung durch eine zweite Teilvorschrift in der Nebenverarbeitungseinheit zu einer veränderten vorläufigen Kennung verändert, und sodann die veränderte vorläufige Kennung an die Hauptverarbeitungseinheit rückübermittelt, sodass die Sensordaten mit einer von der veränderten vorläufigen Kennung abhängigen endgültigen Kennung durch die Hauptverarbeitungseinheit als überprüfte Sensordaten gekennzeichnet und bereitgestellt werden. Die endgültige Kennung ist also die Kennung, mit welcher die Sensordaten, beispielsweise für ein Steuergerät, bereitgestellt werden. Bei der Kennung handelt es sich also um ein Absicherungselement für die Sensordaten. Die endgültige Kennung kann hier mit der rückübermittelten, veränderten vorläufigen Kennung identisch sein, muss es aber, insbesondere in weiteren bevorzugten Ausführungsformen, nicht.

Das hat den Vorteil, dass ohne einen Einfluss der Nebenverarbeitungseinheit keine endgültige Kennung durch die Hauptverarbeitungseinheit bereitgestellt werden kann, welche korrekt ist, also die Sensordaten in korrekter Weise zumindest teilweise charakterisiert, und folglich von anderen, nachgeordneten Geräten wie beispielsweise dem erwähnten Steuergerät als korrekt erkannt werden kann. Das hat den Vorteil, dass die Sensordaten abgesichert und in ihrer Verlässlichkeit gesteigert werden. Zudem sind in der Nebenverarbeitungseinheit lediglich Vorschriften bezüglich der durchzuführenden zweiten Teilvorschrift und dem Empfangen beziehungsweise Übermitteln der Kennung erforderlich, es ist also keine Abhängigkeit der in der Nebenverarbeitungseinheit durchgeführten Vorschriften von den Sensordaten selber mehr gegeben, sodass eine hohe Standardisierung erzielt wird. Die Nebenverarbeitungseinheit muss nicht an die Form der externen Botschaftskommunikation, die von der Hauptverarbeitungseinheit durchgeführt wird, wie z.B. Botschaftslänge, Inhalte und deren Position in der zu übermittelnden Botschaft angepasst werden. Auch die Form der Kennung, z.B. die Kennung ein Botschaftszähler ist, ein CRC8- oder CRC16-Format hat und dergleichen muss der Nebenverarbeitungseinheit nicht bekannt sein. Dieselbe Nebenverarbeitungseinheit kann also mit keinem oder einem sehr geringen Adaptionsaufwand mit einer Vielzahl von unterschiedlichen Hauptverarbeitungseinheiten, die jeweils auf spezifische Anforderungen in einem gegebenen Kraftfahrzeug angepasst sind, zusammenarbeiten. Die Nebenverarbeitungseinheit ist somit weitgehend unabhängig von der Art der gewählten Kennung und es sind keine, allenfalls sehr geringe, Modifikationen der Hardware der Nebenverarbeitungseinheit oder von anderen externen Beschattungen der Nebenverarbeitungseinheit für eine Anpassung an eine Hauptverarbeitungseinheit erforderlich. Mögliche Anpassungen können also im Allgemeinen rein softwareseitig mit geringem Aufwand und entsprechend geringen Kosten umgesetzt werden.

Erfindungsgemäß ist vorgesehen, dass ein Bereitstellen eines von einer Korrektheit der Sensordaten abhängigen positiven oder negativen Prüfungsergebnisses für die weitere Verwendung durch die Nebenverarbeitungseinheit erfolgt. Insbesondere kann das Prüfungsergebnis auch durch die Nebenverarbeitungseinheit selber unter Rückgriff auf die Sensormesswerte, den daraus von der Hauptverarbeitungseinheit abgeleiteten Sensordaten sowie einer Ableitungsvorschrift erzeugt werden. Das hat den Vorteil, dass das Verändern der vorläufigen Kennung oder das Rückübermitteln der veränderten Kennung von dem Prüfungsergebnis abhängig gemacht werden kann.

Erfindungsgemäß ist vorgesehen, dass bei einem positiven Prüfergebnis die vorläufige Kennung durch eine andere zweite Teilvorschrift als bei einem negativen Prüfergebnis verändert wird. Die rückübermittelte Kennung enthält somit eine Information über das Prüfergebnis. Wird die an die Hauptverarbeitungseinheit rückübermittelte Kennung von der Hauptverarbeitungseinheit im Folgenden nicht mehr modifiziert, so ist die rückübermittelte Kennung zugleich auch die endgültige Kennung, welche mit den Sensordaten als Botschaft bereitgestellt wird. Daraus ergibt sich der Vorteil, dass die bereitgestellte Botschaft, also die bereitgestellten Sensordaten mit der bereitgestellten endgültigen Kennung, mit einem reduzierten Aufwand implizit Informationen der Nebenverarbeitungseinheit enthält. Somit können die bereitgestellten Sensordaten als korrekte oder inkorrekte Sensordaten gekennzeichnet werden. Es können sogar über unterschiedliche andere zweite Teilvorschriften mehrere unterschiedliche negative Prüfergebnisse berücksichtigt werden, sodass gegebenenfalls in der rückübermittelten Kennung auch eine Information über die Art möglicher für die jeweiligen negativen Prüfungsergebnisse verantwortlicher Fehler enthalten ist. Dies erleichtert gegebenenfalls ein Identifizieren der Fehlerursache.

In einer weiteren vorteilhaften Ausführungsform ist vorgesehen, dass die in der Hauptverarbeitungseinheit enthaltenen Teilvorschriften mit Untervorschriften, welche für das Generieren einer korrekten endgültigen Kennung ausreichend sind, und mit einer das Generieren der korrekten endgültigen Kennung in der Hauptverarbeitungseinheit verfälschenden Zusatzvorschrift erzeugt werden, und eine in der Nebenverarbeitungseinheit enthaltene Teilvorschrift mit einer zur verfälschenden Zusatzvorschrift inversen Zusatzvorschrift erzeugt wird. Die Wirkung der inversen Zusatzvorschrift in der Nebenverarbeitungseinheit hebt also die Wirkung der verfälschenden Zusatzvorschrift in der Hauptverarbeitungseinheit auf, sodass durch die gesamte Aufbereitungsvorschrift, also sämtliche Teilvorschriften mit sämtlichen Untervorschriften sowie den beiden erwähnten Zusatzvorschriften, eine korrekte endgültige Kennung generiert wird. Diese endgültige Kennung ist in diesem Fall dann eine Kennung, durch welche die bereitgestellten Sensordaten z.B. von nachgeordneten Steuergeräten, welche auf die Sensordaten und die endgültige Kennung zugreifen, als korrekte Sensordaten erkannt werden. Das hat den Vorteil, dass die Nebenverarbeitungseinheit zum Verändern der vorläufigen Kennung in eine veränderte vorläufige Kennung, welche einem Markieren von Sensordaten als korrekte Sensordaten zu Grunde gelegt werden kann, keine Information benötigt, welche über die zweite Teilvorschrift und gegebenenfalls das Prüfungsergebnis hinausgeht. Somit ist die Nebenverarbeitungseinheit ohne oder ohne wesentliche Anpassungen mit einer Vielzahl von an jeweils unterschiedliche Einbausituationen und Sensoren angepassten Hauptverarbeitungseinheiten verwendbar. Es wird somit ein hohes Maß an Standardisierung erreicht und Kosten gespart.

In einer weiteren Ausführungsform ist vorgesehen, dass die Aufbereitungsvorschrift in zumindest drei getrennt voneinander anwendbare vorbestimmte Teilvorschriften separiert wird und die dritte Teilvorschrift die rückübermittelte Kennung mittels der Hauptverarbeitungseinheit modifiziert und die Sensordaten mit der modifizierten rückübermittelten Kennung als endgültige Kennung bereitgestellt werden. Das hat den Vorteil, dass die zweite Teilvorschrift, welche in der Nebenverarbeitungseinheit enthalten ist, weniger Bedingungen erfüllen muss, um zu erreichen, dass die mittels der zweiten Teilvorschrift veränderte vorläufige Kennung einer korrekten endgültigen Kennung zu Grunde liegen kann. Dies ist der Fall, da die dritte Teilvorschrift die rückübermittelte vorläufige Kennung nochmals an in einem spezifischen Anwendungsfall gegebene Erfordernisse anpassen kann. Dadurch kann die Nebenverarbeitungseinheit weiter standardisiert werden, was entsprechend Kosten einspart.

In einer anderen vorteilhaften Ausführungsform ist vorgesehen, dass nur außerhalb der Hauptverarbeitungseinheit eine Kenntnis über die zumindest eine zweite Teilvorschrift vorhanden ist und/oder die zumindest eine zweite Teilvorschrift nichttrivial gewählt wird, sodass die bereitgestellte Kennung ohne ein vorheriges Generieren in der Hauptverarbeitungseinheit und Verändern durch die Nebenverarbeitungseinheit fälschlicherweise nur zufällig und mit einer äußerst geringen Wahrscheinlichkeit als korrekte endgültige Kennung erkannt werden kann. Dadurch, dass entsprechend die Hauptverarbeitungseinheit keine Kenntnis über die zumindest eine zweite Teilvorschrift hat, kann die Hauptverarbeitungseinheit nicht unter Umgehung der Nebenverarbeitungseinheit eine Kennung bereitstellen, welche bereitgestellte Sensordaten als korrekt markiert. Entsprechend ist eine erhöhte Sicherheit die Folge. Unter einer nichttrivialen Teilvorschrift ist hier eine Teilvorschrift zu verstehen, welche eine deutliche Veränderung der Kennung bewirkt, insbesondere an mehreren Positionen der Kennung, sodass ein erratisches Verändern der Kennung nur mit einer äußerst geringen Wahrscheinlichkeit die gleiche Veränderung an der Kennung hervorruft wie die Teilvorschrift. Auch hierdurch wird die Sicherheit, also die Fehler- und Manipulationsresistenz der Kennung, erhöht.

In einer vorteilhaften Ausführungsform ist vorgesehen, dass zum fehlerfreien Verändern der vorläufigen Kennung in der Nebenverarbeitungseinheit, sei es als Grundlage für eine korrekte oder inkorrekte endgültige Kennung, keine über die zumindest eine zweite Teilvorschrift und das Prüfungsergebnis hinausgehende Information berücksichtigt wird oder benötigt wird. Das hat den Vorteil, dass die Nebenverarbeitungseinheit nicht oder nur in sehr geringem Maße an die vorliegenden Gegebenheiten angepasst werden muss und ohne großen Aufwand gemeinsam mit einer Vielzahl von unterschiedlichen, an die jeweiligen Gegebenheiten angepassten Hauptverarbeitungseinheiten verwendet werden kann.

In einer weiteren Ausführungsform ist vorgesehen, dass das Bereitstellen der Sensordaten und der endgültigen Kennung an einen Bus eines Kraftfahrzeugs in welchem die Sensoren angeordnet sind, insbesondere einen CAN-, Flexray- oder Etherent-Bus, erfolgt. Das hat den Vorteil, dass die Sensordaten einfach an eine Vielzahl von weiteren Geräten bereitgestellt werden kann.

Hierbei kann insbesondere vorgesehen sein, dass die übermittelte vorläufige und rückübermittelte veränderte vorläufige Kennung nur mit Kennungskomponenten erzeugt werden, welche von der verwendeten Bus-Architektur unabhängig sind, sodass also die jeweilige Kennung zum Bereitstellen am Bus mit Steuerdaten kombiniert und/oder modifiziert werden muss. Insbesondere weisen also die übermittelte vorläufige und rückübermittelte veränderte vorläufige Kennung nur Kennungskomponenten auf, welche von der verwendeten Bus-Architektur unabhängig sind. Entsprechend ist dann in der zweiten Nebenverarbeitungseinheit keine Kenntnis über die verwendete Bus-Architektur notwendig, um die übermittelte Kennung vorschriftsmäßig zu verändern. Das hat den Vorteil, dass die Nebenverarbeitungseinheit unabhängig von der verwendeten Bus-Architektur ausgeführt sein kann und somit in hohem Maße standardisiert sein kann.
In einer besonders vorteilhaften Ausführungsform ist vorgesehen, dass es sich bei den Sensormesswerten um Messwerte von Sensoren handelt, welche sicherheitsrelevante Parameter eines Fahrbetriebs eines Kraftfahrzeugs charakterisieren und/oder beeinflussen. Das hat den Vorteil, dass bisherige Verfahren, welche aufwendig an jeweils unterschiedliche Kraftfahrzeuge und Sensoren angepasst werden müssen, durch kostengünstigere Verfahren mit einer standardisierten Nebenverarbeitungseinheit ersetzt werden können.
Hierbei kann es vorgesehen sein, dass die Sensormesswerte von einem Lenkwinkelsensor, einem Aufprall- oder Verzögerungssensor von insbesondere einem Airbagsystem, einem Laserscanner, einem Radarsensor oder einem Schlupf- oder Rotationssensor eines Rades erzeugt werden. Das hat den Vorteil, dass diese besagten sicherheitsrelevanten Sensormesswerte kostengünstig aufbereitet werden können.

Die Erfindung kann in einem System für ein Kraftfahrzeug zum Aufbereiten von Sensormesswerten bzw. in einem entsprechenden Kraftfahrzeug mit einem solchen System angewendet werden. Dabei werden die Sensormesswerte von Sensoren des Kraftfahrzeugs erzeugt, wobei das System ausgelegt ist, zunächst die Sensormesswerte in Sensordaten zu überführen, dann durch eine vorbestimmte Aufbereitungsvorschrift aus den Sensordaten eine Kennung zu generieren, infolge die Sensordaten mit der Kennung als überprüfte Sensordaten zu kennzeichnen und schließlich die gekennzeichneten überprüften Sensordaten bereitzustellen. Dabei ist die Aufbereitungsvorschrift in zumindest zwei getrennt voneinander anwendbare vorbestimmte Teilvorschriften aufgeteilt, und das System umfasst kraftfahrzeugseitig eine Hauptverarbeitungseinheit und eine Nebenverarbeitungseinheit. Die Hauptverarbeitungseinheit ist ausgelegt, eine vorläufige Kennung aus den Sensordaten durch eine erste Teilvorschrift zu generieren und die vorläufige Kennung an die Nebenverarbeitungseinheit zu übermitteln. Die Nebenverarbeitungseinheit ist ausgelegt, die von der Hauptverarbeitungseinheit übermittelte vorläufige Kennung durch eine zweite Teilvorschrift zu einer veränderten vorläufigen Kennung zu verändern, und die veränderte Kennung an die Hauptverarbeitungseinheit rückzuübermitteln. Die Hauptverarbeitungseinheit ist auch ausgelegt, die Sensordaten mit einer von der von der Nebenverarbeitungseinheit rückübermittelten veränderten Kennung abhängigen endgültige Kennung als überprüfte Sensordaten zu kennzeichnen und bereitzustellen. Vorteile und weitere bevorzugte Ausführungsformen ergeben sich aus den Vorteilen und bevorzugten Ausführungsformen des Verfahrens. Ein Ausführungsbeispiel der Erfindung wird nachfolgend anhand einer schematischen Zeichnung näher erläutert. Dabei visualisiert die Fig. eine beispielhafte Ausführungsform des Verfahrens.

Die Fig. illustriert eine beispielhafte Ausführungsform des Verfahrens. Ein kraftfahrzeugseitiger Sensor 1 erzeugt hier Sensormesswerte x. Diese Sensormesswerte x werden nun einerseits an eine Hauptverarbeitungseinheit 2 und andererseits im gezeigten Beispiel an eine Überprüfungseinheit 3 übermittelt. Im vorliegenden Beispiel ist der Sensor 1 als Lenkwinkel ausgeführt und die Sensormesswerte sind zum Beispiel analoge oder digitale Rohdaten wie ein Widerstandswert eines elektrischen Widerstandes. In der Hauptverarbeitungseinheit 2 wird nun der Sensormesswert x in digitale Sensordaten y überführt. Nach dem Überführen der Sensormesswerte x in die Sensordaten y werden diese im vorliegenden Beispiel an eine Überprüfungseinheit 3 übermittelt. Alternativ kann der Sensormesswert x auch direkt von der Hauptverarbeitungseinheit 2 an die Überprüfungseinheit 3 oder gegebenenfalls Nebenverarbeitungseinheit 4 übermittelt werden. Basierend auf den Sensordaten y, welche dann beispielsweise einen Winkelwert wie 12 Grad repräsentieren, wird nun eine vorläufige Kennung a generiert. Bei dieser vorläufigen Kennung a kann es sich um ein unvollständiges Absicherungselement einer zyklischen Redundanzüberprüfung, ein Teil-CRC, handeln. Es könnte sich aber auch um ein vollständiges Absicherungselement handeln, welches dann z.B. nochmals durch eine Zusatzvorschrift verfälscht und transformiert wurde. Allein mit der vorläufigen Kennung a können die Sensordaten y, wenn sie mit dieser gekennzeichnet und bereitgestellt würden, jedenfalls nicht als korrekte Sensordaten y erkannt werden, bzw. eine Botschaft, welche die Sensordaten y mit der vorläufigen Kennung a enthält wird z.B. von einer nachgeordneten Steuereinheit als nicht verlässliche Botschaft mit korrekten Sensordaten y erkannt.

Die vorläufige Kennung a wird dann an die Nebenverarbeitungseinheit 4 übermittelt. In der Nebenverarbeitungseinheit 4 wird die vorläufige Kennung a in eine veränderte Kennung b transformiert. Diese Transformation kann im gezeigten Beispiel auf unterschiedliche Weisen erfolgen. Es wird nämlich im vorliegenden Beispiel der Nebenverarbeitungseinheit 4 von z. B. der Überprüfungseinheit 3 ein positives oder negatives Prüfungsergebnis OK, NOK eines Vergleichs der Sensormesswerte x mit den Sensordaten y zur Verfügung gestellt. In einer alternativen Ausführungsform ist jedoch beispielsweise auch denkbar, dass das Prüfungsergebnis in der Nebenverarbeitungseinheit 4 selber berechnet wird, der dann neben der vorläufigen Kennung a auch die Sensormesswerte x und die Sensordaten y, sowie eine Berechnungsvorschrift zum Überprüfen der Sensordaten y zur Verfügung gestellt wird.

Eine zweite Teilvorschrift 6, welche die vorläufige Kennung a in die veränderte Kennung b transformiert, kann dabei vorliegend in Abhängigkeit von dem Prüfungsergebnis OK, NOK die Form einer Funktion f oder einer anderen Funktion g annehmen. In dem hier gezeigten Beispiel wird im Falle eines positiven Prüfungsergebnisses OK die korrekte Funktion f gewählt, welche z.B. die in der Hauptverarbeitungseinheit 2 vorgenommene Verfälschung des in der vorläufigen Kennung a enthaltenen Teilelements der zyklischen Redundanzüberprüfung annulliert oder rückgängig macht. Im Falle eines negativen Prüfergebnisses NOK wird jedoch eine andere Funktion g gewählt, sodass die veränderte Kennung b weiterhin die in der Hauptverarbeitungseinheit 2 durchgeführte oder eine andere Verfälschung beinhaltet. Infolge wird die vorläufige, veränderte Kennung b von der Nebenverarbeitungseinheit 4 wieder an die Hauptverarbeitungseinheit 2 rückübermittelt. Die vorläufige Kennung b, welche im gezeigten Beispiel entweder eine korrekte oder eine verfälschte Teil-CRC enthält, wird dann vorliegend durch eine dritte Teilvorschrift 7 in eine endgültige Kennung c, beispielsweise eine vollständige, dann entweder korrekte oder inkorrekte, CRC, überführt. Diese endgültige Kennung c wird mit den Sensordaten y kombiniert, die Sensordaten y also mit der endgültigen Kennung c gekennzeichnet, und beispielsweise an einen Fahrzeug-Bus oder ein sonstiges Kommunikationsmittel bereitgestellt.

Hat die Überprüfungseinheit 3 nun ein positives Prüfergebnis OK bereitgestellt, so liegt der rückübermittelten veränderten Kennung b neben der vorläufigen Kennung a die korrekte Funktion f zugrunde und die veränderte Kennung b enthält somit eine unverfälschte Teil-CRC, sodass die endgültige Kennung c entsprechend zu den Sensordaten y passt und die Gesamtbotschaft y+c aus Sensordaten y und endgültiger Kennung c als korrekt erkannt werden kann. Hat die Überprüfungseinheit 3 ein negatives Prüfergebnis NOK bereitgestellt, so liegt der veränderten Kennung b die andere Funktion g zu Grunde und die veränderte Kennung b enthält noch eine verfälschte Teil-CRC. Auch die endgültige Kennung c passt folglich nicht zu den Sensordaten y, sodass die Gesamtbotschaft y+c als fehlerhaft oder unzuverlässig erkannt werden kann.

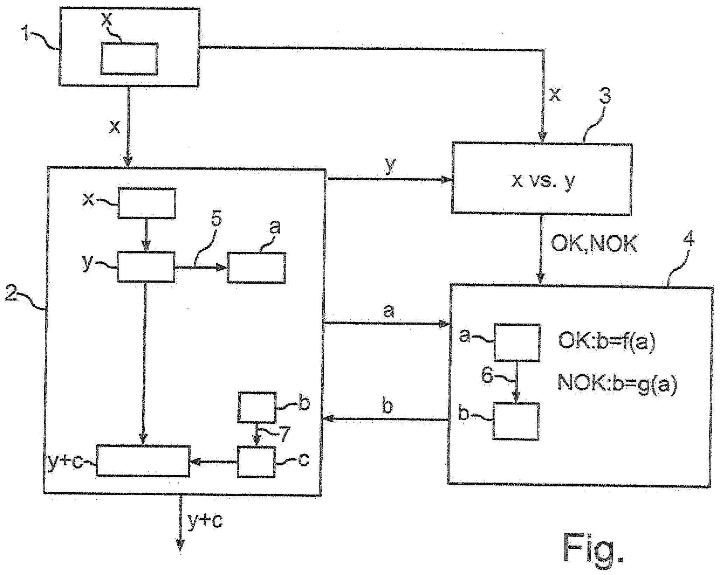

## Patentansprüche

1. Verfahren zum Aufbereiten von durch kraftfahrzeugseitig angeordnete Sensoren (1) erzeugten Sensormesswerten (x), welche in Sensordaten (y) überführt werden, bei welchem
- eine vorbestimmte Aufbereitungsvorschrift zur Generierung einer endgültigen Kennung (c), bei der es sich um einen Prüfwert der Sensordaten handelt, in zumindest zwei getrennt voneinander anwendbare vorbestimmte Teilvorschriften (5, 6, 7) aufgeteilt ist, und zunächst
- eine vorläufige Kennung (a) aus den Sensordaten (y) durch eine erste Teilvorschrift (5) in einer kraftfahrzeugseitigen Hauptverarbeitungseinheit (2) generiert wird,
- die vorläufige Kennung (a) an eine kraftfahrzeugseitige Nebenverarbeitungseinheit (4) übermittelt wird,
- ein von einer Korrektheit der Sensordaten (y) abhängiges positives oder negatives Prüfungsergebnis (OK, NOK) durch Vergleich der Sensormesswerte (x) mit den Sensordaten (y) für die weitere Verwendung durch die Nebenverarbeitungseinheit (4) bereitgestellt wird,
- die vorläufige Kennung (a) durch eine zweite Teilvorschrift (6) in der Nebenverarbeitungseinheit (4) zu einer veränderten Kennung (b) verändert wird, wobei bei einem positiven Prüfergebnis (OK) die vorläufige Kennung (a) durch eine spezifische zweite Teilvorschrift (6) verändert wird, und bei einem negativen Prüfergebnis (NOK) die vorläufige Kennung (a) durch eine andere spezifische zweite Teilvorschrift verändert wird, die unterschiedlich zur spezifischen zweiten Teilvorschrift beim positiven Prüfergebnis (OK) ist,
und
- die veränderte Kennung (b) an die Hauptverarbeitungseinheit (2) rückübermittelt wird, und die Sensordaten (y) mit einer von der veränderten Kennung (b) abhängigen endgültige Kennung (c) durch die Hauptverarbeitungseinheit (2) als überprüfte Sensordaten (y) gekennzeichnet und bereitgestellt werden.

2. Verfahren nach einem der vorhergehenden Ansprüche,
**dadurch gekennzeichnet, dass**
die in der Hauptverarbeitungseinheit (2) enthaltenen Teilvorschriften (5, 7) mit Untervorschriften, welche für das Generieren einer korrekten endgültigen Kennung (c) ausreichend sind, und mit einer das Generieren der endgültigen Kennung (c) in der Hauptverarbeitungseinheit (2) verfälschenden Zusatzvorschrift erzeugt werden, und eine in der Nebenverarbeitungseinheit (4) enthaltene zumindest eine zweite Teilvorschrift (6) mit einer zur verfälschenden Zusatzvorschrift inversen Zusatzvorschrift erzeugt wird.

3. Verfahren nach einem der vorhergehenden Ansprüche,
**dadurch gekennzeichnet, dass**
die Aufbereitungsvorschrift in zumindest drei getrennt voneinander anwendbare vorbestimmte Teilvorschriften (5, 6, 7) separiert wird und eine dritte Teilvorschrift (7) die veränderte Kennung (b) mittels der Hauptverarbeitungseinheit (2) modifiziert, und die Sensordaten (y) mit der modifizierten Kennung als endgültige Kennung (c) bereitgestellt werden.

4. Verfahren nach einem der vorhergehenden Ansprüche,
**dadurch gekennzeichnet, dass**
nur außerhalb der Hauptverarbeitungseinheit (2) eine Kenntnis über die zumindest eine zweite Teilvorschrift (6) vorhanden ist und/oder die zumindest eine zweite Teilvorschrift (6) nichttrivial gewählt wird, derart, dass die Teilvorschrift eine deutliche Veränderung der Kennung bewirkt, sodass die endgültige Kennung (c) ohne ein vorheriges Generieren in der Hauptverarbeitungseinheit (2) und Verändern in der Nebenverarbeitungseinheit (4) fälschlicherweise nur zufällig und mit einer äußerst geringen Wahrscheinlichkeit als korrekte endgültige Kennung (c) erkannt werden kann.

5. Verfahren nach einem der vorhergehenden Ansprüche,
**dadurch gekennzeichnet, dass**
zum fehlerfreien Verändern der vorläufigen Kennung (a) in der Nebenverarbeitungseinheit (4) keine über die zumindest eine zweite Teilvorschrift (6) und das Prüfungsergebnis (OK, NOK) hinausgehende Information berücksichtigt wird.

6. Verfahren nach einem der vorhergehenden Ansprüche,
**dadurch gekennzeichnet, dass**
das Bereitstellen der Sensordaten (y) und der endgültigen Kennung (c) an einen Bus eines Kraftfahrzeugs, insbesondere einen CAN-, Ethernet- oder Flexray-Bus, erfolgt.

7. Verfahren nach Anspruch 6,
**dadurch gekennzeichnet, dass**
die vorläufige und veränderte Kennung (a, b) nur Kennungskomponenten erzeugt werden, welche von der verwendeten Busarchitektur unabhängig sind, sodass die jeweilige Kennung (a, b) zum Bereitstellen am Bus mit Steuerdaten kombiniert und/oder modifiziert wird.

8. Verfahren nach einem der vorhergehenden Ansprüche,
**dadurch gekennzeichnet, dass**
es sich bei den Sensormesswerten (x) um Messwerte von Sensoren (1) handelt, welche sicherheitsrelevante Parameter eines Fahrbetriebs eines Kraftfahrzeugs charakterisieren und/oder beeinflussen.

9. Verfahren nach Anspruch 8,
**dadurch gekennzeichnet, dass**
die Sensormesswerte (x) von einem Lenkwinkelsensor, einem Aufprall- oder Verzögerungssensor von insbesondere einem Airbag-System, einem Laserscanner, einem Radarsensor oder einem Schlupfsensor eine Rades erzeugt werden.

## Claims

1. Method for preprocessing sensor measured values (x) which are generated by sensors (1) arranged on the motor vehicle side and are converted into sensor data (y), in which
- a predetermined preprocessing rule for generating a final identifier (c), which is a test value for the sensor data, is divided into at least two predetermined partial rules (5, 6, 7) which can be used separately from one another, and
- a preliminary identifier (a) is first of all generated from the sensor data (y) by means of a first partial rule (5) in a main processing unit (2) on the motor vehicle side,
- the preliminary identifier (a) is transmitted to a secondary processing unit (4) on the motor vehicle side,
- a positive or negative test result (OK, NOK) dependent on a correctness of the sensor data (y) is provided for further use by the secondary processing unit (4) by comparing the sensor measured values (x) with the sensor data (y),
- the preliminary identifier (a) is changed by means of a second partial rule (6) in the secondary processing unit (4) to form a changed identifier (b), in which case, in the event of a positive test result (OK), the preliminary identifier (a) is changed by means of a specific second partial rule (6) and, in the event of a negative test result (NOK), the preliminary identifier (a) is changed by means of another specific second partial rule which differs from the specific second partial rule in the event of the positive test result (OK), and
- the changed identifier (b) is transmitted back to the main processing unit (2), and the sensor data (y) are identified as checked sensor data (y) by the main processing unit (2) with a final identifier (c) dependent on the changed identifier (b) and are provided.

2. Method according to one of the preceding claims,
**characterized in that**
the partial rules (5, 7) contained in the main processing unit (2) are generated with sub-rules, which suffice to generate a correct final identifier (c), and with an additional rule which distorts the generation of the final identifier (c) in the main processing unit (2), and an at least one second partial rule (6) contained in the secondary processing unit (4) is generated with an additional rule which is the inverse of the distorting additional rule.

3. Method according to one of the preceding claims,
**characterized in that**
the preprocessing rule is separated into at least three predetermined partial rules (5, 6, 7) which can be used separately from one another, and a third partial rule (7) modifies the changed identifier (b) by means of the main processing unit (2), and the sensor data (y) having the modified identifier as the final identifier (c) are provided.

4. Method according to one of the preceding claims,
**characterized in that**
knowledge of the at least one second partial rule (6) is available only outside the main processing unit (2) and/or the at least one second partial rule (6) is selected to be non-trivial in such a manner that the partial rule causes a considerable change in the identifier, with the result that the final identifier (c) can be incorrectly identified only randomly and with an extremely low probability as a correct final identifier (c) without having been previously generated in the main processing unit (2) and changed in the secondary processing unit (4).

5. Method according to one of the preceding claims,
**characterized in that**
in order to change the preliminary identifier (a) in the secondary processing unit (4) without errors, no information which goes beyond the at least one second partial rule (6) and the test result (OK, NOK) is taken into account.

6. Method according to one of the preceding claims,
**characterized in that**
the sensor data (y) and the final identifier (c) are made available to a bus of a motor vehicle, in particular a CAN, Ethernet or Flexray bus.

7. Method according to Claim 6,
**characterized in that**
the preliminary and changed identifiers (a, b) are produced only identifier components which are independent of the bus architecture used, with the result that the respective identifier (a, b) is combined and/or modified with control data for provision on the bus.

8. Method according to one of the preceding claims,
**characterized in that**
the sensor measured values (x) are measured values from sensors (1) which characterize and/or influence safety-relevant parameters of a driving mode of a motor vehicle.

9. Method according to Claim 8,
**characterized in that**
the sensor measured values (x) are generated by a steering angle sensor, an impact or delay sensor of, in particular, an airbag system, a laser scanner, a radar sensor or a slip sensor of a wheel.

## Revendications

1. Procédé de préparation de valeurs de mesure de capteurs (x) générées par des capteurs (1) disposés côté véhicule automobile, qui sont transformées dans des données de capteurs (y), dans lequel
- une instruction de préparation prédéterminée destinée à générer un identificateur définitif (c), qui est une valeur de vérification des données de capteurs, est divisée en au moins deux instructions partielles (5, 6, 7) prédéterminées pouvant être appliquées séparément l'une de l'autre, puis
- un identificateur provisoire (a) est généré à partir des données de capteurs (y) par une première instruction partielle (5) dans une unité de traitement principale (2) côté véhicule automobile,
- l'identificateur provisoire (a) est transmis à une unité de traitement secondaire (4) côté véhicule automobile,
- un résultat de vérification (OK, NOK) positif ou négatif dépendant du caractère correct des données de capteurs (y) est fourni par comparaison des valeurs de mesure de capteurs (x) aux données de capteurs (y) en vue de leur utilisation ultérieure par l'unité de traitement secondaire (4),
- l'identificateur provisoire (a) est modifié par une deuxième instruction partielle (6) dans l'unité de traitement secondaire (4) afin d'obtenir un identificateur modifié (b), dans lequel, lorsque le résultat de vérification est positif (OK), l'identificateur provisoire (a) est modifié par une deuxième instruction partielle spécifique (6) et lorsque le résultat de la vérification est négatif (NOK), l'identificateur provisoire (a) est modifié par une autre deuxième instruction partielle spécifique qui est différente de la deuxième instruction partielle spécifique lors du résultat de vérification positif (OK), et
- l'identificateur modifié (b) est renvoyé à l'unité de traitement principale (2) et les données de capteurs (y) sont **caractérisées par** un identificateur définitif (c) dépendant de l'identificateur modifié (b) par l'unité de traitement principale (2) en tant que données de capteurs vérifiées (y) et sont fournies.

2. Procédé selon l'une quelconque des revendications précédentes, **caractérisé en ce que** les instructions partielles (5, 7) contenues dans l'unité de traitement principale (2) sont générées par des sous-instructions qui sont suffisantes pour générer un identificateur définitif correct (c) et par une instruction supplémentaire rendant erronée la génération de l'identificateur définitif (c) dans l'unité de traitement principale (2), et au moins une deuxième instruction partielle (6) contenue dans l'unité de traitement secondaire (4) est générée par une instruction supplémentaire inverse de l'instruction supplémentaire provoquant l'instruction erronée.

3. Procédé selon l'une quelconque des revendications précédentes,
**caractérisé en ce que** l'instruction de préparation est séparée en au moins trois instructions partielles (5, 6, 7) prédéterminées pouvant être appliquées séparément les unes des autres et **en ce qu'**une troisième instruction partielle (7) modifie l'identificateur modifié (b) au moyen de l'unité de traitement principale (2), et **en ce que** les données de capteurs (y) sont fournies au moyen de l'identificateur modifié en tant qu'identificateur définitif (c).

4. Procédé selon l'une quelconque des revendications précédentes,
**caractérisé en ce qu'**une connaissance de l'au moins une deuxième instruction partielle (6) est disponible à l'extérieur de l'unité de traitement principale (2) et/ou **en ce que** l'au moins une deuxième instruction partielle (6) est sélectionnée de manière non triviale afin que l'instruction partielle provoque une modification claire de l'identificateur et que l'identificateur définitif (c) ne puisse être reconnu qu'aléatoirement de manière erronée sans avoir été préalablement généré dans l'unité de traitement principale (2) et avoir été modifié dans l'unité de traitement secondaire (4) et afin qu'il puisse être reconnu avec une probabilité extrêmement faible comme étant l'identificateur définitif correct (c).

5. Procédé selon l'une quelconque des revendications précédentes,
**caractérisé en ce que**, pour modifier de façon non erronée l'identificateur provisoire (a) dans l'unité de traitement secondaire (4), aucune information concernant l'au moins une deuxième instruction partielle (6) et le résultat de vérification (OK, NOK) n'est prise en compte.

6. Procédé selon l'une quelconque des revendications précédentes,
**caractérisé en ce que** la fourniture des données de capteurs (y) et de l'identificateur définitif (c) s'effectue sur un bus d'un véhicule automobile, notamment un bus CAN, Ethernet ou Flexray.

7. Procédé selon la revendication 6,
**caractérisé en ce que** les identificateurs provisoire et modifié (a, b) ne sont générés que des composants d'identification qui sont indépendants de l'architecture de bus utilisée de manière à ce que l'identificateur respectif (a, b) soit combiné et/ou modifié pour être fourni sur le bus avec des données de commande.

8. Procédé selon l'une quelconque des revendications précédentes,
**caractérisé en ce que** les valeurs de mesure de capteurs (x) sont des valeurs de mesure provenant de capteurs (1) qui caractérisent et/ou agissent sur des paramètres relevant de la sécurité de la conduite d'un véhicule automobile.

9. Procédé selon la revendication 8,
**caractérisé en ce que** les valeurs de mesure de capteurs (x) sont générées par un capteur d'angle de braquage, un capteur de choc ou de décélération, notamment d'un système à coussin gonflable, d'un analyseur laser, d'un capteur radar ou d'un capteur de dérapage d'une roue.
